# EUROPÄISCHE PATENTSCHRIFT

(11) **EP 0 443 701 B1**
(45) Veröffentlichungstag und Bekanntmachung des Hinweises auf die Patenterteilung: **30.11.1994**
(21) Anmeldenummer: 91250049.3
(22) Anmeldetag: 21.02.1991
(51) Int. Cl.: G02B 6/44

(54) **Verfahren zur Herstellung einer Lichtleitader**
Method of fabricating a sheathed light guide
Méthode pour la fabrication d'une fibre optique gainée

(30) Priorität: 21.02.1990 DE 4005861
(43) Veröffentlichungstag der Anmeldung: 28.08.1991
(73) Patentinhaber: SIEMENS AKTIENGESELLSCHAFT, 80333 München (DE)
(72) Erfinder: Niesemeyer, Norbert, Dr., W-8630 Coburg (DE); Oestreich, Ulrich, W-8000 München (DE)

(56) Entgegenhaltungen:
- EP-A- 0 275 994
- DE-A- 3 111 963
- DE-A- 3 425 649

## Beschreibung

Die Erfindung bezieht sich auf ein Verfahren zur Herstellung einer Lichtleitader, wobei eine Lichtleitfaser durch einen Extruder mit einer Hülle versehen und die so erhaltene Lichtleitader über eine im Bereich einer Kühleinrichtung vorgesehene Umlenkrolle geführt ist.

Es ist bekannt, eine definierte Faserüberlänge in Bündeladern dadurch zu schaffen, daß die Fasern in den Bündeladern an einer oder mehreren Stellen definierter Umlenkradien mit Hilfe der ebenfalls möglichst definierten Faserrückhaltkräfte an die Innenwand der Bündelader gepreßt werden und so zwangsläufig die gleiche Geschwindigkeit wie die Innenwand auf diesem Radius erhalten (DE-OS-34 25 649). Durch eine nachfolgende Abkühlung bis zum Endzustand gewinnt die Faser gegenüber der Hüllenwand dann die gewünschte Überlänge, die von der Temperaturdifferenz zwischen der Umlenkstelle und dem Endzustand abhängt. Dabei tritt unvermeidbar auf dem genannten Umlenkradius durch die Verlagerung der Faser(n) von der Bündeladermitte zum Innenrand der Aderhülle ein Längenverlust auf, der durch delta 1/1 = delta r/R (r = Radius der inneren Bündelhülle, R = gesamter Umlenkradius der Bündelhülle) beschrieben wird. Dies ist ein in vielen Fällen störender Nebeneffekt, der immer dann unsichere Wirkung zeigt, wenn die Umlenkstelle zu weit vom Extruder entfernt ist, so daß zur Erzielung einer festen Faserauflage zu große Rückhaltkräfte auf die Faser zu bringen sind. Diese Rückhaltkräfte vergrößern nicht nur das Bruchrisiko der optischen Fasern, sondern dehnen die Fasern auch elastisch, wodurch die Längenbilanz negativ beeinflußt wird.

Da es inzwischen Meßmethoden gibt, die die relative auf die Hülle bezogene Faserlänge auf 10⁻³ genau zu bestimmen gestatten, liegt es nahe, das oben beschriebene Prinzip so zu verändern, daß die Faserüberlänge variabel und einstellbar wird. Das ist z.B. durch die bekannte Veränderung (E O 275 994 A2) des erwähnten Umlenkradius möglich, aber nur in bestimmten Stufen und nur nach Unterbrechung des Fertigungsprozesses. Eine weitere bekannte Methode (DE-OS 27 57 786) besteht in der Veränderung der Temperatur an der Umlenkstelle.

Der Erfindung liegt die Aufgabe zugrunde, ein mit einfachen Mitteln auskommendes Verfahren zur Beeinflussung der Faserlänge anzugeben. Diese Aufgabe wird erfindungsgemäß bei einem Verfahren der eingangs genannten Art dadurch gelöst, daß zur Einstellung der Über- bzw. Unterlänge der Lichtleitfaser die Umlenkrolle zum Extruder hin bzw. von diesem weg verschoben wird.

Diese Methode wird man bevorzugt bei Anlagen verwenden, bei denen sich die Ader mehr oder weniger mit der fortschreitenden Länge der Kühleinrichtung abkühlt. Nimmt man dabei an, daß die Faserrückhaltekräfte und die übrigen Fertigungsparameter konstant sind, würde eine Verschiebung der Umlenkrolle zum Extruder hin eine Erhöhung der Adertemperatur und umgekehrt bedeuten. In bestimmten Grenzen, die durch die Mindeststabilität der Aderwand einerseits und durch die Faserrückhaltekräfte andererseits gegeben sind, kann die Faserüber- bzw. -unterlänge so auf den gewünschten Wert eingestellt werden. Dieses Verfahren ist auch für hohe Fertigungsgeschwindigkeiten geeignet.

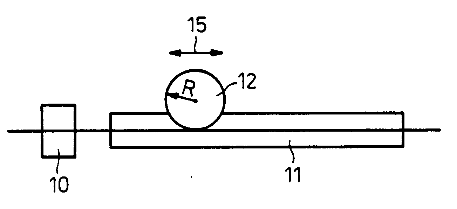

Die Erfindung wird anhand der Zeichnung und des nachfolgend beschriebenen Ausführungsbeispieles im einzelnen erläutert. Die einzige Figur zeigt rein schematisch eine Fertigungslinie.

Die Fertigungslinie besteht im wesentlichen aus einem Extruder 10 und der nachgeschalteten Kühleinrichtung 11, in deren Verlauf eine Umlenkrolle 12 angeordnet ist, die in Richtung des Doppelpfeiles 15 verstellbar angeordnet ist. Dabei wird die Umlenkrolle im allgemeinen so bemessen, daß eine anfängliche Faserunterlänge von 1% eingestellt wird; also für eine Ader mit den Abmessungen 1,7/2,8 mm etwa mit einem Durchmesser von ca 150 mm versehen, woraus sich eine maximale Biegedehnung der harten Innenschicht von etwa 1,6% ergibt. Mit der mittleren Adertemperatur von 120 °C an dieser Stelle wird die Aderhülle anschließend um ca. 1% geschrumpft, so daß die resultierende Faserüberlänge 0 ist. Mit zunehmenden Abstand der Umlenkrolle vom Extruder steigt die resultierende Faserunterlänge, während man durch Verkürzung des Abstandes eine zunehmende Faserüberlänge erhält. Es versteht sich, daß dieses Verfahren automatisiert und als Regelkreis ausgebildet werden kann.

## Patentansprüche

1. Verfahren zur Herstellung einer Lichtleitader, wobei eine Lichtleitfaser durch einen Extruder (10) mit einer Hülle versehen und die so erhaltene Lichtleitader über eine im Bereich einer Kühleinrichtung (11) vorgesehene Umlenkrolle (12) geführt wird,
**dadurch gekennzeichnet,**
daß zur Einstellung der Über- bzw. Unterlänge der Lichtleitfaser die Umlenkrolle (12) zum Extruder hin bzw. von diesem weg verschoben wird.

## Claims

1. Method of fabricating a sheathed light guide, an optical fibre being provided with a sheath by an extruder (10) and the sheathed light guide thus obtained being led over a deflecting roller (12) provided in the region of a cooling device (11), characterized in that, for setting the overlength or underlength of the optical fibre, the deflecting roller (12) is displaced towards or away from the extruder.

## Revendications

1. Procédé pour fabriquer un conducteur formant guide de lumière, selon lequel on applique une gaine autour d'une fibre conductrice de lumière, au moyen d'une extrudeuse (10) et on fait circuler le conducteur formant guide de lumière, ainsi obtenu, sur un galet de renvoi (12) prévu au voisinage d'un dispositif de refroidissement (11),
caractérisé par le fait que pour régler la longueur excessive ou le manque de longueur de la fibre conductrice de lumière, on rapproche ou on écarte le galet de renvoi (12) de l'extrudeuse.
